# EUROPÄISCHE PATENTSCHRIFT

(11) **EP 3 749 699 B1**
(45) Veröffentlichungstag und Bekanntmachung des Hinweises auf die Patenterteilung: **09.03.2022**
(21) Anmeldenummer: 19701385.7
(22) Anmeldetag: 30.01.2019
(51) Int. Cl.: C08G 18/48, C08G 18/76, C08G 18/20, C08G 18/30, C09J 175/08, B32B 27/40, E04C 2/292, B32B 5/18, B32B 5/24, B32B 5/32, B32B 7/12, B32B 13/04, B32B 15/04, B32B 15/18, B32B 15/20

(54) **VERBUNDELEMENTE AUS THERMISCHEN DÄMMMATERIAL, KLEBSTOFF UND DECKSCHICHT**
COMPOSITE ELEMENTS MADE FROM THERMAL INSULATING MATERIAL, ADHESIVE AND COVERING
COMPOSANTS COMPOSITES EN MATÉRIAU D'ISOLATION THERMIQUE, ADHÉSIF ET COUCHE DE RECOUVREMENT

(30) Priorität: 07.02.2018 EP 18155625
(43) Veröffentlichungstag der Anmeldung: 16.12.2020
(73) Patentinhaber: BASF SE, 67056 Ludwigshafen am Rhein (DE)
(72) Erfinder: JACOBMEIER, Olaf, 49448 Lemfoerde (DE); KRONIG, Sabrina, 49448 Lemfoerde (DE); HUSKOBLA, Antje, 49448 Lemfoerde (DE); RENNER, Christian, 49448 Lemfoerde (DE); HUNTEMANN, Peter, 49448 Lemfoerde (DE)
(74) Vertreter: BASF IP Association
(86) Internationale Anmeldenummer: PCT/EP2019/052175
(87) Internationale Veröffentlichungsnummer: WO 2019/154677

(56) Entgegenhaltungen:
- WO-A1-2012/091927
- US-A1- 2003 104 241

## Beschreibung

Die vorliegende Erfindung betrifft ein Verfahren zur Herstellung von Verbundelementen, enthaltend thermisches Dämmmaterial (B) und Klebstoff (C) sowie gegebenenfalls mindestens eine Deckschicht (A), wobei man das thermische Dämmmaterial (B) mit dem Klebstoff (C) verklebt und der Klebstoff (C) ein Polyurethanklebstoff ist, herstellbar durch Vermischen von Polyisocyanaten (a) mit Polyolen (b) mit zumindest zwei gegenüber Isocyanaten reaktiven Gruppen, Treibmitteln (c), enthaltend Wasser, und gegebenenfalls Kettenverlängerern (d), Katalysatoren (e) und sonstige Hilfsmittel (f), wobei die Polyole (b) Polyetherole enthalten und die Polyetherole, 50 bis 90 Gew.-% mindestens eines Polyalkylenoxids (b1) mit einer Hydroxylzahl von 120 bis 300 mg KOH/g, ausgehend von einem 2-funktionellen Startermolekül und einem Ethylenoxydanteil, bezogen auf den Gehalt an Alkylenoxyd, von 60 bis 100 Gew.-%, und einem Anteil an primären OH-Gruppen von 50 bis 100 %, 10 bis 50 Gew.-% mindestens eines Polyalkylenoxids (b2) mit einer Hydroxylzahl von 120 bis 600 mg KOH/g, ausgehend von einem difunktionellen und/oder einem trifunktionellen Startermolekül und einem Ethylenoxydanteil, bezogen auf den Gehalt an Alkylenoxyd, von 0 bis 40 Gew.-% und 0 bis 30 Gew.-% mindestens eines weiteren Polyalkylenoxids (b3) mit einer Hydroxylzahl von 100 bis 800 mg KOH/g, ausgehend von einem 2 bis 4-funktionellen Startermolekül, jeweils bezogen auf das Gesamtgewicht der Komponenten (b1) bis (b3), enthalten. Weiter betrifft die vorliegende Erfindung ein von Verbundelemente enthaltend thermisches Dämmmaterial (B) und Klebstoff (C) und gegebenenfalls mindestens einer Deckschicht (A), herstellbar nach einem solchen Verfahren.

Die Herstellung von Verbundelementen aus insbesondere metallischen Deckschichten und einem Kern aus einem thermischen Dämmmaterial ist bekannt. Insbesondere die Herstellung von Platten, die einen Kern aus Mineralwolle enthalten, häufig auch als Miwo-Sandwichelemente bezeichnet, auf kontinuierlich arbeitenden Doppelbandanlagen wird gegenwärtig in immer größerem Umfang praktiziert. Der wesentliche Vorteil solcher Elemente, insbesondere solcher unter Einsatz von anorganischen Dämmmaterialien, wie Mineralwolle oder bekannter Aerogel-Materialien, besteht neben der Brauchbarkeit als Konstruktionselemente in ihrem großen Widerstand gegenüber Flammeinwirkung. Sandwichelemente auf Mineralwollbasis, auch als Miwo-Sandwichelemente bezeichnet, werden insbesondere zur Gestaltung von Fassaden und Dächern verschiedenster Gebäude eingesetzt, bei denen es auf einen sehr hohen Brandschutz ankommt. Als Deckschichten werden dabei neben beschichteten Stahlblechen auch Edelstahl-, Kupfer- oder Aluminiumbleche eingesetzt. Für die Verklebung des Kernmaterials untereinander oder mit den metallischen Deckschichten haben sich ein- oder zweikomponentige Kleber auf Isocyanatbasis bewährt.

So beschreibt beispielsweise EP 1896259 die Herstellung von Sandwichelementen aus Deckschicht und mineralischem Dämmmaterial, wobei Deckschicht und Dämmmaterial mit einem 2-Komponenten-Polyurethanklebstoff verklebt werden. Im Beispiel wird ein 2-Komponenten- Polyurethanklebstoff eingesetzt, wobei in der Polyolkomponente eine Mischung aus Polyetherpolyolen auf Basis von Propylenoxid, Flammschutzmittel, Wasser, Schaumstabilisator und Aminkatalysator beschrieben wird. Diese Polyolkomponente wird mit polymerem Diphenylmethan zum Klebstoff umgesetzt.

Ein besonderes Augenmerk liegt auf dem hohen Widerstand der Sandwichelemente gegenüber der Brennbarkeit. Sofern beispielsweise Deckschichten aus Metall und anorganische Isolationsmittel als Dämmmaterial eingesetzt werden, ist die einzige brennbare Komponente der Polyurethanklebstoff. Aus diesem Grund hat es viele Versuche gegeben, die Brennbarkeit des Klebstoffs zu reduzieren.

So offenbart beispielsweise WO 2003051954 die Bereitstellung eines flammgeschützten Polyurethanklebstoffs auf Basis von Ricinusöl, Polyetherpolyolen auf Basis von Propylenoxid, fettsäurehaltigen Polyesterpolyolen und Zusatzmitteln, wie Wasser als Treibmittel, Katalysator und Flammschutzmittel. Nachteilig an diesen Klebstoffen ist insbesondere eine geringe Klebewirkung.

WO2012/091927 beschreibt einen Klebstoff für die Herstellung von MiWo-Sandwichelementen, wobei Ricinusöl durch einen aromatisches Polyesterdiol ersetzt wird. Dieses wird in Mischung mit einem Polyetherpolyol mit einer Funktionalität von 2 bis 4 und einer Viskosität bis 500 mPas eingesetzt. Dabei wird bei leicht verbesserte Haftung ein geringer Brennwert von 16 MJoul/kg im gefüllten Zustand (53,55 Gew.-% Calciumcarbonat als Füllstoff; Beispiel 1) und 26,0 MJoul/kg im ungefüllten Zustand erreicht.

Weiter ist die Verklebung von Aerogel-Materialien oder Aerogel-Verbundstoffen bekannt. So beschreibt beispielsweise EP 2665876 die Verwendung von Wasserglas Lösungen als Klebstoff für den Verbund mehrerer Lagen von Aerogel-Materialien oder Aerogel-Verbundstoffen zu Herstellung einer Aerogel-Dämmplatte für Anwendungen in der Gebäude-Dämmung. Die erzielten transversalen Reißfestigkeiten liegen dabei sehr niedrig und erlauben keine Norm-konforme Verwendung z.B. in Wärmedämmverbundsystemen

Weiter sind auch Flammfeste Verbundsysteme bekannt, die eine oder mehrere Schichten aus Aerogelmaterialien sowie gegebenenfalls anderen isolierenden oder nicht isolierenden Materialien enthalten. Zur Herstellung dieser Verbundelemente müssen die thermischen Dämmmaterialien, beispielsweise einzelne Lagen oder Schichten der Dämmmaterialien untereinander und die Dämmmaterialien und die gegebenenfalls vorhandenen Deckschichten verklebt werden. Der Widerstand gegenüber der Flammwirkung ist dabei aber in wesentlichem Maße auch von der Brennbarkeit des Klebstoffs abhängig. So sind zwar anorganische, im Wesentlichen nicht brennbare Klebstoffe bekannt, diese weisen aber häufig nur unzureichende Hafteigenschaften auf.

Aufgabe der vorliegenden Erfindung war es, Verbundelemente aus thermischem Dämmmaterial (B) und Klebstoff (C) und gegebenenfalls mindestens einer Deckschicht (A), zu liefern, die eine hohe Haftung der Verklebung des thermischen Dämmmaterials aufweist, beispielsweise der Verklebung unterschiedlicher Schichten des gleichen oder unterschiedlicher thermischer Dämmmaterialien (B) oder des thermischen Dämmmaterials (B) und der Deckschicht (A) aufweist, und wobei der eingesetzte Klebstoff einen geringen Brennwert aufweist. Weiter sollten die Verbundelemente mit einer geringen Menge an Klebstoff herstellbar sein.

Die erfindungsgemäße Aufgabe wurde überraschenderweise gelöst durch ein Verbundelement enthaltend thermisches Dämmmaterial (B) und Klebstoff (C) sowie gegebenenfalls mindestens eine Deckschicht (A), herstellbar durch ein Verfahren bei dem man das thermische Dämmmaterial (B) mit dem Klebstoff (C) verklebt und der Klebstoff (C) ein Polyurethanklebstoff ist, herstellbar durch Vermischen von Polyisocyanaten (a) mit Polyolen (b) mit zumindest zwei gegenüber Isocyanaten reaktiven Gruppen, Treibmitteln (c), enthaltend Wasser, und gegebenenfalls Kettenverlängerern (d), Katalysatoren (e) und sonstige Hilfsmittel (f), wobei die Polyole (b) Polyetherole enthalten und die Polyetherole, 50 bis 90 Gew.-% mindestens eines Polyalkylenoxids (b1) mit einer Hydroxylzahl von 120 bis 300 mg KOH/g, ausgehend von einem 2-funktionellen Startermolekül und einem Ethylenoxydanteil, bezogen auf den Gehalt an Alkylenoxyd, von 60 bis 100 Gew.-%, und einem Anteil an primären OH-Gruppen von 50 bis 100 %, 10 bis 50 Gew.-% mindestens eines Polyalkylenoxids (b2) mit einer Hydroxylzahl von 120 bis 600 mg KOH/g, ausgehend von einem difunktionellen und/oder einem trifunktionellen Startermolekül und einem Ethylenoxydanteil, bezogen auf den Gehalt an Alkylenoxyd, von 0 bis 40 Gew.-% und 0 bis 30 Gew.-% mindestens eines weiteren Polyalkylenoxids (b3) mit einer Hydroxylzahl von 100 bis 800 mg KOH/g, ausgehend von einem 2 bis 4-funktionellen Startermolekül, jeweils bezogen auf das Gesamtgewicht der Komponenten (b1) bis (b3), enthalten. Weiter betrifft die vorliegende Erfindung ein Verfahren zur Herstellung des erfindungsgemäßen Verbundelements, bei dem man das thermische Dämmmaterial (B) mit dem Klebstoff (C) verklebt.

Dabei können zur Herstellung der Verbundmaterialien gemäß vorliegender Erfindung neben dem thermischen Dämmaterial (B), dem Klebstoff (C) und gegebenenfalls der Deckschicht (A) weitere Materialien eingesetzt werden. Vorzugsweise besteht das erfindungegemäße Verbundelement aus thermischen Dämmaterial (B), dem Klebstoff (C) und gegebenenfalls der Deckschicht (A).

Im Rahmen der vorliegenden Erfindung umfasst das Verkleben des thermischen Dämmmaterials (B) jegliches Verkleben, bei dem das thermische Dämmmaterial (B) in Kontakt mit dem Klebstoff (C) steht. Dies kann das Verkleben unterschiedlicher Lagen des thermischen Dämmmaterials (B) untereinander sowie das Verkleben des thermischen Dämmmaterials (B) mit anderen Materialien, wie beispielsweise der Deckschicht (A) umfassen.

Zur Herstellung des Klebstoffs (C) können als Polyisocyanate (a) alle aus dem Stand der Technik bekannten aliphatischen, cycloaliphatischen und aromatischen zwei- oder mehrwertigen Isocyanate sowie beliebige Mischungen daraus eingesetzt werden. Vorzugsweise werden aromatische zwei- oder mehrwertigen Isocyanate eingesetzt. Beispiele sind 4,4', 2,4' und 2,2'-Diphenylmethandiisocyanat (MDI), die Mischungen aus monomeren Diphenylmethandiisocyanaten und höherkernigen Homologen des Diphenylmethandiisocyanats (Polymer-MDI), Tetramethylendiisocyanat, Hexamethylendiisocyanat (HDI), Isophorondiisocyanat (IPDI), 1,5-Naphthalindiisocyanat (NDI), 2,4,6-Toluoltriisocyanat und 2,4- und 2,6-Toluoldiisocyanat (TDI), oder Mischungen daraus.

Besonders bevorzugt werden aromatische Isocyanate, ausgewählt aus der Gruppe, bestehend aus 2,4-Toluoldiiisocyanat, 2,6-Toluoldiiisocyanat, 2,4'-Diphenylmethandiisocyanat und 4,4'-Diphenylmethandiisocyanat und höherkernige Homologe des Diphenylmethandiisocyanats (Polymer-MDI) sowie Gemische dieser Isocyanate eingesetzt. Insbesondere wird als Isocyanat ein aromatisches Isocyanat, ausgewählt aus der gruppe, bestehend aus 2,4'-Diphenylmethandiisocyanat, 4,4'-Diphenylmethandiisocyanat, höherkernigen Homologen des Diphenylmethandiisocyanats oder Mischungen aus zwei oder mehreren dieser Verbindungen eingesetzt.

Als Polyole (b) mit zumindest zwei gegenüber Isocyanaten reaktiven Gruppen können für die Herstellung von Polyurethanen bekannten isocyanatreaktiven Verbindungen mit einem Molekulargewicht von mehr als 250 g/mol eingesetzt werden. Vorzugsweise werden eingesetzt Polyesterole, Polyetherole oder Polyether-Polyesterole, die beispielsweise durch Alkoxylierung von Polyestern erhalten werden können.

Polyetherpolyole (b) werden nach bekannten Verfahren, beispielsweise durch anionische Polymerisation mit Alkalihydroxiden oder Alkalialkoholaten als Katalysatoren oder durch kationische Polymerisation mit Lewis-Säuren, wie Antimonpentachlorid oder Bortrifluorid-Etherat als Katalysatoren, unter Zusatz mindestens eines Startermoleküls, das 2 bis 8 reaktive Wasserstoffatome enthält, aus einem oder mehreren Alkylenoxiden mit 2 bis 4 Kohlenstoffatomen im Alkylenrest hergestellt. Weiter können als Katalysatoren auch Multimetallcyanidverbindungen, sogenannte DMC-Katalysatoren, eingesetzt werden. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Bevorzugt werden 1,2-Propylenoxid, Ethylenoxid oder Mischungen aus 1,2-Propylenoxid und Ethylenoxid verwendet.

Dabei enthalten die Polyetherpolyole (b) 50 bis 90 Gew.-%, vorzugsweise 60 bis 85 Gew.-% und insbesondere 65 bis 80 Gew.-% mindestens eines Polyalkylenoxids (b1) mit einer Hydroxylzahl von 120 bis 300 mg KOH/g, vorzugsweise 150 bis 250 mg KOH/g und besonders bevorzugt 160 bis 200 mg KOH/g, ausgehend von einem 2-funktionellen Startermolekül und einem Ethylenoxydanteil, bezogen auf den Gehalt an Alkylenoxyd, von 60 bis 100 Gew.-%, vorzugsweise 70 bis 100 Gew.-%, besonders bevorzugt 90 bis 100 Gew.-% und insbesondere ausschließlich Ethylenoxid, und einem Anteil an primären OH-Gruppen von 50 bis 100 %, vorzugsweise 90 bis 100 % und insbesondere 100 %. Als Startermoleküle kommen vorzugsweise Wasser oder 2- und 3-wertige Alkohole in Betracht, wie Ethylenglykol, 1,2- oder 1,3-Propandiol, Diethylenglykol, Dipropylenglykol und 1,4-Butandiol.

Weiter enthält die Komponente (b) 10 bis 50 Gew.-%, vorzugsweise 15 bis 40 Gew.-% und besonders bevorzugt 20 bis 35 Gew.-% mindestens eines Polyalkylenoxids (b2) mit einer Hydroxylzahl von 120 bis 600 mg KOH/g, vorzugsweise 150 bis 500 mg KOH/g und besonders bevorzugt 150 bis 400 mg KOH/g, ausgehend von einem difunktionellen und/oder einem trifunktionellen, vorzugsweise ausschließlich trifunktionellen Startermolekül und einem Ethylenoxydanteil, bezogen auf den Gehalt an Alkylenoxyd, von 0 bis 40 Gew.-%, vorzugsweise 0 bis 20 Gew.-% und insbesondere ausschließlich Propylenoxid. Als Startermolekül kommen vorzugsweise Wasser oder 2- und 3-wertige Alkohole in Betracht, wie Ethylenglykol, 1,2- oder 1,3-Propandiol, Diethylenglykol, Dipropylenglykol, 1,4-Butandiol, Glycerin und Trimethylolpropan, vorzugsweise Glycerin in Betracht.

Neben den Polyetherolen (b1) und (b2) können 0 bis 30 Gew.-%, vorzugsweise 0 bis 15 Gew.-%, besonders bevorzugt 0 bis 5 Gew.-% mindestens eines weiteren Polyalkylenoxids (b3), jeweils bezogen auf das Gesamtgewicht der Komponenten (b1) bis (b3), das sich von den Polyetherolen (b1) und (b2) unterscheidet, enthalten sein. Dieses weist vorzugsweise eine Hydroxylzahl von 100 bis 800 mg KOH/g, ausgehend von einem 2 bis 4-funktionellen Startermolekül, auf. In einer ganz bevorzugten Ausführungsform wird kein Polyetherol (b3) eingesetzt.

Neben den Polyetherolen (b1) und (b2) sowie gegebenenfalls (b3) können weitere in der Polyurethanchemie übliche Polyole eingesetzt werden. Diese weisen ein Molekulargewicht von mehr als 250 g/mol und vorzugsweise weniger als 10.000 g/mol auf und umfassen weitere Polyetherpolyole, die nicht unter die Definition der Polyetherpolyole (b1) bis (b3) fallen, sowie Polyesterpolyole und andere, gegenüber Isocyanat reaktive Gruppen enthaltenden Verbindungen mit einem Molekulargewicht von größer 250 g/mol, wie OH-Gruppen enthaltende oder alkoxylierte Fette, wie Ricinusöl oder alkoxyliertes Ricinusöl oder Fettsäuren, wie Ricinolsäure oder Polyamine.

Vorzugsweise beträgt der Anteil der Polyetherpolyole (b1) bis (b3) an den Polyolen (b) 70 bis 100 Gew.-%, besonders bevorzugt 85 bis 100 Gew.-%, mehr bevorzugt 90 bis 100 Gew.-% und weiter bevorzugt 95 bis 100 %, bezogen auf das Gesamtgewicht der Komponente (b). Insbesondere werden als Polyole (b) ausschließlich die Polyole (b1), (b2) und gegebenenfalls (b3) eingesetzt.

Als Startermolekül kommen vorzugsweise Wasser oder 2- und 3-wertige Alkohole in Betracht, wie Ethylenglykol, 1,2- oder 1,3-Propandiol, Diethylenglykol, Dipropylenglykol, 1,4-Butandiol, Glycerin und Trimethylolpropan.

Als Treibmittel (c) wird Treibmittel, enthaltend Wasser, eingesetzt. Dabei kann Wasser alleine oder in Kombination mit weiteren Treibmitteln eingesetzt werden. Der Gehalt an Wasser im Treibmittel (c) ist vorzugsweise größer als 40 Gew.-%, besonders bevorzugt größer als 60 Gew.-% und ganz besonders bevorzugt größer als 80 Gew.-%, bezogen auf das Gesamtgewicht des Treibmittels (c). Insbesondere wird Wasser als alleiniges Treibmittel eingesetzt. Werden neben Wasser weitere Treibmittel eingesetzt, können beispielsweise Fluorchlorkohlenwasserstoffe, Fluorkohlenwasserstoffe, Kohlenwasserstoffe, Säuren und flüssiges bzw. gelöstes Kohlendioxid verwendet werden. Vorzugsweise enthalten Treibmittel (c) weniger als 50 Gew.-%, mehr bevorzugt weniger als 20 Gew.-%, besonders bevorzugt weniger als 10 Gew.-% und insbesondere 0 Gew.-%, bezogen auf das Gesamtgewicht des Treibmittels (c), Fluorchlorkohlenwasserstoffe, Fluorkohlenwasserstoffe und/oder Kohlenwasserstoffe. In einer weiteren Ausführungsform kann als Treibmittel (c) eine Mischung aus Wasser und Ameisensäure und/oder Kohlendioxid eingesetzt werden. Um das Treibmittel einfacher in der Polyolkomponente dispergieren zu können, kann das Treibmittel (c) mit polaren Verbindungen, wie Dipropylenglycol, vermischt sein.

Die Treibmittel (c) werden in einer solchen Menge eingesetzt, dass die Dichte des Polyurethanklebstoffs (C), der durch Reaktion der Komponenten (a) bis (f) entsteht, inklusive Verstärkungsmittel (f) im Bereich von 40 bis 800 kg/m³, bevorzugt 50 bis 200 kg/m³, besonders bevorzugt 60 bis 120 kg/m³ liegt. Vorzugsweise beträgt der Gehalt an Wasser, bezogen auf das Gesamtgewicht der Komponenten (b) bis (e) 0,3 bis 3 Gew.-%, besonders bevorzugt 0,8 bis 2 Gew.-%.

Gegebenenfalls können zur Herstellung des Klebstoffs (C) auch Kettenverlängerungs- und / oder Vernetzungsmittel (d) eingesetzt werden. Die Zugabe der Kettenverlängerungs- und / oder Vernetzungsmittel kann vor, zusammen mit oder nach der Zugabe der Polyole erfolgen. Als Kettenverlängerungsmittel und / oder Vernetzungsmittel werden Substanzen mit einem Molekulargewicht von vorzugsweise kleiner 250 g/mol, besonders bevorzugt von 60 bis 200 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder in Form von Mischungen eingesetzt werden. Werden Kettenverlängerer eingesetzt, sind 1,3- und 1,2-Propandiol, Dipropylenglycol, Tripropylenglycol 1,3 Butandiol besonders bevorzugt.

Sofern Kettenverlängerungsmittel, Vernetzungsmittel oder Mischungen davon Anwendung finden, kommen diese zweckmäßigerweise in Mengen von 1 bis 30 Gew.-%, vorzugsweise 1,5 bis 20 Gew.-% und insbesondere 2 bis 10 Gew.-%, bezogen auf das Gewicht von Polyisocyanaten, gegenüber polymeren gegenüber Isocyanat reaktiven Verbindungen und Kettenverlängerungsmitteln und / oder Vernetzungsmitteln zum Einsatz, vorzugsweise werden keine Kettenverlängerer und/oder Vernetzungsmittel eingesetzt.

Als Katalysatoren (e) können alle Verbindungen eingesetzt werden, die die Isocyanat-Wasser-Reaktion oder die Isocyanat-Polyol-Reaktion beschleunigen. Solche Verbindungen sind bekannt und beispielsweise im "Kunststoffhandbuch, Band 7, Polyurethane", Carl Hanser Verlag, 3. Auflage 1993, Kapitel 3.4.1 beschrieben. Diese umfassen aminbasierte Katalysatoren und Katalysatoren auf Basis von organischen Metallverbindungen.

Als Katalysatoren auf Basis von organischen Metallverbindungen können beispielsweise organische Zinnverbindungen, wie Zinn-(II)-salze von organischen Carbonsäuren, wie Zinn-(II)-acetat, Zinn-(II)-octoat, Zinn-(II)-ethyl-hexoat und Zinn-(II)-laurat und die Dialkylzinn-(IV)-salze von organischen Carbonsäuren, wie Dibutyl-zinndiacetat, Dibutylzinndilaurat, Dibutylzinn-maleat und Dioctylzinn-diacetat, sowie Bismutcarboxylate wie Bismut(III)-neodecanoat, Bismut-2-ethylhexanoat und Bismut-octanoat oder Alkalisalze von Carbonsäuren, wie Kaliumacetat oder Kaliumformiat eingesetzt werden.

Vorzugsweise wird als Katalysator (e) ein Anminkatalysator, d.h. zumindest eine zumindest ein tertiäres Stickstoffatom enthaltende Verbindung, eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Di-aza-bicyclo-(2,2,2)-octan und Alkanolaminverbindungen, wie Triethanolamin, Triisopropanolamin, N-Methyl- und N-Ethyl-diethanolamin und Dimethylethanolamin. Bei diesen tertiären Aminen kann es sich auch um Verbindungen, die auch gegenüber Isocyanat reaktive Gruppen, wie OH-, NH- oder NH₂-Gruppen, tragen können. Einige der am häufigsten eingesetzten Katalysatoren sind Bis(2-Dimethyl-aminoethyl)ether, N,N,N,N,N-Pentamethyldiethylentriamin, N,N,N-Triethylamino-ethoxyethanol, Dimethylcyclohexylamin, Dimethylbenzylamin, Triethyl-amin, Triethylendiamin, Pentamethyldipropylentriamin, Dimethylethanolamin, N-Methylimidazol, N-Ethylimidazol, Tetramethylhexamethylendiamin, Tris-(Dimethylaminopropyl)hexahydrotriazin, Dimethylaminopropylamin, N-Ethylmorpholin, Diazabicycloundecen und Diazabicyclononen. Falls geringe Migration von Katalysatoren aus den erfindungsgemäßen Klebstoffen (C) und/oder eine geringe Emission an VOC Verbindungen gewünscht ist, können auch einbaubare Katalysatoren eingesetzt werden. Auch kann ganz auf Katalysatoren verzichtet werden.

Vorzugsweise werden ausschließlich Aminkatalysatoren als Katalysatoren (e) eingesetzt. Vorzugsweise verwendet werden 0,001 bis 5 Gew.-%, insbesondere 0,05 bis 2 Gew.-% Katalysator, bezogen auf das Gewicht der Komponente (b).

Als Hilfsmittel (f) können zum Beispiel Flammschutzmittel, Stabilisatoren, Verdickungsmittel, Füllstoffe und sonstige Zusatzstoffe, wie Antioxidantien eingesetzt werden. Vorzugsweise werden zumindest Füllstoffe eingesetzt.

Als Flammschutzmittel können im Allgemeinen die aus dem Stand der Technik bekannten Flammschutzmittel verwendet werden. Geeignete Flammschutzmittel sind beispielsweise bromierte Ether (Ixol B 251), bromierte Alkohole, wie Dibromneopentylakohol, Tribromneopentylalkohol und PHT-4-Diol, sowie chlorierte Phosphate, wie z.B. Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat, oder Mischungen daraus.

Außer den bereits genannten halogensubstituierten Phosphaten können auch anorganische Flammschutzmittel, wie roter Phosphor, roten Phosphor enthaltende Zurichtungen, expandierbarer Graphit (Blähgraphit), Aluminiumoxidhydrat, Antimontrioxid, Arsenoxid, Ammoniumpolyphosphat und Calciumsulfat oder Cyanursäurederivate, wie Melamin, oder Mischungen aus mindestens zwei Flammschutzmitteln, wie Ammoniumpolyphosphaten und Melamin sowie gegebenenfalls Stärke, zum Flammfestmachen der erfindungsgemäß hergestellten Polyurethan-Hartschaumstoffe verwendet werden. Als weitere flüssige, halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Die Flammschutzmittel werden im Rahmen der vorliegenden Erfindung bevorzugt in einer Menge von 0 bis 25% bezogen auf das Gesamtgewicht der Komponenten (b) bis (e) verwendet.

Als Stabilisatoren werden Stoffe bezeichnet, welche die Ausbildung einer regelmäßigen Zellstruktur bei der Schaumbildung fördern. Beispielsweise sind genannt: Siliconhaltige Schaumstabilisatoren, wie Siloxan-Oxalkylen-Mischpolymerisate und andere Organopolysiloxane. Ferner Alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A oder Mischungen aus zwei oder mehreren dieser Schaumstabilisatoren.

Schaumstabilisatoren werden bevorzugt in einer Menge von 0,5 bis 4, besonders bevorzugt 0,5 bis 3 Gew.-%, bezogen auf das Gesamtgewicht der Komponenten (b) bis (e), verwendet.

Als Verdickungsmittel werden Substanzen eingesetzt, die die Viskosität der Reaktionsmischung nach dem Vermischen der Komponenten (a) bis (f) schnell erhöhen, wobei die Reaktionsmischung aber noch fließfähig bleibt. Dies wird erreicht durch Verbindungen mit Molekulargewichten von kleiner 500 g/mol und zwei gegenüber Isocyanaten reaktiven Gruppen, die in der Reaktion mit Isocyanat reaktiver sind als die gegenüber Isocyanat reaktiven Gruppen der Verbindungen aus Komponente (b), erreicht. Dabei sind in der Regel primäre OH-Gruppen reaktiver als sekundäre OH-Gruppen und Aminogruppen reaktiver als OH-Gruppen. Verdickungsmittel bewirken, dass Isocyanate bevorzugt mit den Verdickungsmitteln reagieren. Dies führt zu einem schnellen Molekulargewichtsaufbau und damit zu einer schnellen Viskositätszunahme, nicht aber zu einer Vernetzung bzw. zu Molekülen, die aufgrund ihres großen Molekulargewichts zu einer Aushärtung führen. Vorzugsweise weisen die Verdickungsmittel ein Molekulargewicht von 58 bis 300 350 g/mol, besonders bevorzugt 100 bis 200 350 g/mol auf. Dabei weisen die Verdickungsmittel als gegenüber Isocyanaten reaktive Gruppen vorzugsweise zwei primäre Aminogruppen, die jeweils primär oder sekundär und aliphatische oder aromatische sein können, auf. In einer besonders bevorzugten Ausführungsform sind die Aminogruppen primären Aminogruppen an aromatische Kohlenstoffatome, vorzugsweise an einen aromatischen 6-Ring gebunden. Insbesondere werden als Verdickungsmittel (d) N,N'-Bis-(3-aminopropyl)ethylendiamin, 4,4'-Methylenebis(2-methylcyclohexylamine), 4,4'-Methylenbis[2,6-diethylanilin], 3-Aminomethyl-3,5,5-trimethylcyclohexylamin, 3,5-dimethylthio-2,4-toluoldiamin und Polyetheramine eingesetzt.

Als Füllstoffe, insbesondere verstärkend wirkende Füllstoffe, sind die an sich bekannten, üblichen organischen und anorganischen Füllstoffe zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas und andere. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril, Polyurethan-, Polyesterfasern auf der Grundlage von aromatischen und/oder aliphatischen Dicarbonsäureestern und insbesondere Kohlenstoffasern.

Die anorganischen und organischen Füllstoffe können einzeln oder als Gemische verwendet werden und werden der Reaktionsmischung vorteilhafterweise in Mengen von 0 bis 80 Gew.-%, besonders bevorzugt 20 bis 75 Gew.-%, und insbesondere 40 bis 70 Gew.-%, bezogen auf das Gewicht der Komponenten (b) bis (e), einverleibt.

Vorzugsweise beträgt der Brennwert des Klebstoffs (C) mit 60 Gew.-% anorganischen Füllstoffen gemäß DIN EN ISO 1716 höchstens 20 MJ/kg, besonders bevorzugt höchstens 18 MJ/kg und insbesondere höchstens 15 MJ/kg. Weiter beträgt der Brennwert des Klebstoffs (C) ohne Einsatz von Füllstoffen gemäß DIN EN ISO 1716 höchstens 30 MJ/kg, besonders bevorzugt höchstens 28 MJ/kg und insbesondere höchstens 26 MJ/kg.

Als Deckschicht (A) können Gipskartonplatten, Glasfliese, Aluminiumfolien, Aluminium- Kupfer- oder Stahlbleche, bevorzugt Aluminiumfolien, Aluminium- oder Stahlbleche, besonders bevorzugt Stahlbleche verwendet werden. Die Stahlbleche können beschichtet, beispielsweise durch übliche Korrosionsschutzbeschichtungen, oder unbeschichtet sein. Vorzugsweise werden sie nicht Corona-behandelt.

Bei den üblichen Sandwich-Elementen wird das thermische Dämmmaterial von einer unteren und einer oberen Deckschicht umschlossen. Für die Herstellung müssen beide Deckschichten mit dem thermischen Dämmmaterial (B) verklebt werden. Weiter kann das thermische Dämmmaterial (B) aus mehreren Schichten bestehen, die mit dem erfindungsgemäßen Klebstoff (C) verklebt werden. Zum Verkleben der einzelnen Schichten des thermischen Dämmmaterials und/oder des thermischen Dämmmaterials mit der Deckschicht, beispielsweise der oberen Deckschicht, kann der Klebstoff (C) auf die Deckschicht oder auf das thermische Dämmmaterial aufgetragen werden.

Bei dem für das erfindungsgemäße Verfahren eingesetzte thermische Dämmmaterial (B) handelt es sich beispielsweise um organische thermische Dämmmaterialien, wie handelsübliche Platten aus geschäumten Kunststoffen, wie geschäumtem Polystyrol (EPS, XPS), geschäumtem PVC, geschäumtem Polyurethan oder Melaminharzschäumen oder bevorzugt um anorganische, thermische Dämmmaterialien, wie übliche mineralische Dämmmaterialien. Solche mineralischen Dämmmaterialien umfassen vorzugsweise thermisches Dämmmaterial aus Mineralwolle und/oder Steinwolle, beispielsweise als Vliesstoff oder in Plattenform. Insbesondere werden als thermisches Dämmmaterial (B) Platten aus Mineralwolle, wie Glaswolle, oder Steinwolle eingesetzt.

In einer Ausführungsform der vorliegenden Erfindung wird der erfindungsgemäße Klebstoff (C) zur Verklebung bei der Herstellung von Aerogel- Isolationssystemen eingesetzt. Diese weisen Schichten aus Aerogel haltigen Materialien, beispielsweise Aerogelverbundstoffen, und / oder Aerogelen sowie nicht aerogelhaltigen Isolationsmaterialien und/ oder Nichtisolierenden Materialien, wie Deckschichten (A), auf.

Aerogele sind eine Klasse poröser Materialien mit offenen Zellen, die ein Gerüst von miteinander verbundener Strukturen, mit einem entsprechenden Netz von Poren, die in dem Gerüst integriert sind, und mit einer Einlagerungsphase innerhalb des Netzes von Poren, das primär aus Gasen, wie beispielsweise Luft, besteht. Aerogele sind typischerweise durch eine geringe Dichte, eine hohe Porosität, eine große Oberfläche und kleine Porengrößen gekennzeichnet. Aerogel-Materialien mit geringer Dichte werden weithin als die besten verfügbaren festen Isolierstoffe angesehen. Aerogele fungieren als Isolierstoffe primär durch Minimieren von Leitung (geringe strukturelle Dichte führt zu einem gewundenen Pfad für die Energieübertragung durch das feste Gerüst), Konvektion (große Porenvolumen und sehr kleine Porengrößen führen zu minimaler Konvektion) und Strahlung (IR absorbierende oder streuende Dotierungsstoffe werden leicht über die gesamte Aerogel-Matrix dispergiert). Aerogele können in einem breiten Anwendungsbereich verwendet werden, der Folgendes umfasst: Isolation beim Erwärmen und Kühlen, Schalldämmung, elektronische Dielektrika, Luftfahrt, Energiespeicherung und -erzeugung sowie Filtration. Weiterhin zeigen Aerogel-Materialien viele andere interessante akustische, optische, mechanische und chemische Eigenschaften, die sie bei verschiedenen Isolations- und Nicht-Isolationsanwendungen ungemein nützlich machen.

Aerogele können durch ihre physikalischen und strukturellen Eigenschaften von anderen porösen Materialien unterschieden werden. Innerhalb des Kontexts der vorliegenden Offenbarung bezieht sich der Begriff "Aerogel" oder "Aerogel-Material" auf ein Gel, das ein Gerüst von miteinander verbundenen Strukturen (Netz miteinander verbundener Oligomere, Polymere oder Kolloidpartikel, welche die feste Struktur eines Gels oder eines Aerogels ausbilden) mit einem entsprechenden Netz miteinander verbundener Poren umfasst, die in dem Grundkörper integriert sind und Gase, wie beispielsweise Luft, als dispergiertes Einlagerungsmedium enthalten; und das durch die folgenden physikalischen und strukturellen Eigenschaften (gemäß Stickstoff-Porosimetrietests) gekennzeichnet ist, die Aerogelen zuschreibbar sind: (a) ein durchschnittlicher Porendurchmesser im Bereich von ungefähr 2 nm bis ungefähr 100 nm, (b) eine Porosität von mindestens 80 % oder mehr und (c) eine Oberfläche von ungefähr 20 m2/g oder mehr. Aerogel-Materialien der vorliegenden Offenbarung umfassen folglich alle Aerogele oder anderen offenzelligen Zusammensetzungen, welche die definierenden Elemente erfüllen, die in den vorhergehenden Abätzen dargelegt wurden, was Zusammensetzungen umfasst, die sonst als Xerogele, Kryogele, Ambigele, mikroporöse Materialien und dergleichen kategorisiert werden können. Aerogel-Materialien können ferner auch durch zusätzliche physikalische Eigenschaften gekennzeichnet sein, die Folgendes umfassen: (d) ein Porenvolumen von ungefähr 2,0 ml/g oder mehr, vorzugsweise ungefähr 3,0 ml/g oder mehr; (e) eine Dichte von ungefähr 0,50 g/cm3 oder weniger, vorzugsweise ungefähr 0,25 g/cm3 oder weniger; und wobei (f) mindestens 50 % des gesamten Porenvolumens Poren mit einem Porendurchmesser zwischen 2 und 50 nm umfassen; obwohl eine Erfüllung dieser zusätzlichen Eigenschaften für die Charakterisierung einer Zusammensetzung als Aerogel-Material nicht erforderlich ist.

Aerogel-Materialien können als im Wesentlichen einteilige Bahn oder als Blöcke aus Material ausgebildet sein, die ein im Wesentlichen kontinuierliches und miteinander verbundenes strukturelles Gerüst und ein Porennetz aufweisen. Aerogel-Materialien können auch als teilchenförmige Aerogel-Materialien ausgebildet sein, was Aerogel-Material umfasst, das in Form von Teilchen, Partikeln, Granulaten, Kügelchen oder Pulvern vorliegt, die miteinander kombiniert oder komprimiert werden können, denen aber ein miteinander verbundenes strukturelles Aerogel-Gerüst und ein Porennetz zwischen individuellen Teilchen fehlt.

Aerogel-Material kann in verschiedene Verbundmaterialien eingearbeitet werden, was Folgendes umfasst: faserverstärkte Aerogel-Verbundstoffe; Aerogel-Verbundstoffe, die Zusatzelemente umfassen, beispielsweise Trübungsmittel, Verbundmaterialien, bei denen Aerogel-Teilchen, -Partikel, -Granulate, -Kügelchen oder -Pulver in ein festes oder halbfestes Material eingearbeitet sind, wie beispielsweise Bindemittel, Harze, Zemente, Schaumstoffe, Polymere oder ähnliche feste Materialien.

Aerogel-Materialien können mit verschiedenen Faserverstärkungsmaterialien faserverstärkt sein, um ein flexibleres, robusteres und anschmiegsameres Verbundstoffprodukt zu erzielen. Die Faserverstärkungsmaterialien können an jedem Punkt in dem Gelbildungsprozess zu den Gelen hinzugefügt werden, um eine nasse faserige Gelzusammensetzung herzustellen. Die nasse Gelzusammensetzung kann dann getrocknet werden, um eine faserverstärkte Aerogel-Verbundstoffprodukt herzustellen. Faserverstärkungsmaterialien können die Form von diskreten Fasern, Webstoffen, Vliesstoffen, Watten, Geweben, Matten und Filzen aufweisen. Faserverstärkungen können aus organischen Fasermaterialien, anorganischen Fasermaterialien oder Kombinationen davon angefertigt werden.

In einer bevorzugten Ausführungsform werden Vliesstoff-Faserverstärkungsmaterialien als kontinuierliche Bahn aus miteinander verbundenen oder verflochtenen Faserverstärkungsmaterialien in die Aerogel-Materialien eingearbeitet. Der Prozess umfasst anfänglich das Herstellen einer kontinuierlichen Bahn aus faserverstärktem Gel durch Gießen oder Imprägnieren einer Gelvorstufenlösung in eine kontinuierliche Bahn aus miteinander verbundenen oder verflochtenen Faserverstärkungsmaterialien. Die flüssige Phase kann dann mindestens teilweise aus den faserverstärkten Gelbahnen extrahiert werden, um ein bahnartiges, faserverstärktes Aerogel- Verbundstoffprodukt herzustellen.

Ein Aerogel-Material kann auch ein Trübungsmittel umfassen, um die Strahlungskomponente der Wärmeübertragung zu reduzieren. An jedem Punkt vor der Gelbildung können trübende Verbindungen oder ihre Vorstufen in der Mischung dispergiert werden, die Gelvorstufen umfasst. Beispiele für trübende Verbindungen umfassen folgende, ohne jedoch darauf beschränkt zu sein: Borcarbid [B4C], Diatomit, Manganferrit, MnO, NiO, SnO, Ag₂O, Bi₂O₃, Ruß, Titanoxid, Eisentitanoxid, Aluminiumoxid, Zirkoniumsiliziumdioxidt, Zirconiumoxid, Eisen(II)-oxid, Eisen(III)-oxid, Mangandioxid, Eisentitanoxid (Ilmenit), Chromoxid, Carbide (wie beispielsweise SiC, TiC oder WC) oder ihre Mischungen. Beispiele für Vorstufen trübender Verbindungen umfassen folgende, ohne jedoch darauf beschränkt zu sein: TiOSO₄ oder TiOCl₂.

Aerogel-Materialien und Aerogel-Verbundstoffe der vorgelegten Offenbarung weisen im Allgemeinen ausgezeichnete thermische Isolationseigenschaften auf, was sehr geringe Wärmeleitfähigkeitseigenschaften umfasst. Innerhalb des Kontexts der vorliegenden Offenbarung bezeichnen die Begriffe "Wärmeleitfähigkeit" und "WL" eine Messung der Fähigkeit eines Materials oder einer Zusammensetzung, Wärme zwischen zwei Oberflächen auf beiden Seiten des Materials oder der Zusammensetzung bei einer Temperaturdifferenz zwischen den beiden Oberflächen zu übertragen. Wärmeleitfähigkeit wird insbesondere als die Wärmeenergie gemessen, die pro Zeiteinheit und pro Oberflächeneinheit geteilt durch die Temperaturdifferenz übertragen wird. Typischerweise wird sie in SI-Einheiten als mW/m*K (Milliwatt pro Meter * Kelvin) gemessen. Im Kontext der vorliegenden Offenbarung werden Wärmeleitfähigkeitsmessungen gemäß Normen ASTM C177 bei einer Temperatur von ungefähr 37,5 °C bei Atmosphärendruck und einer Kompression von ungefähr 2 psi erfasst, außer es ist anders angegeben. Vorzugsweise weisen Aerogel-Materialien oder -Verbundstoffe der vorliegenden Offenbarung eine Wärmeleitfähigkeit von ungefähr 30 mW/m*K oder weniger, ungefähr 25 mW/m*K oder weniger, ungefähr 20 mW/m*K oder weniger, ungefähr 18 mW/m*K oder weniger, ungefähr 16 mW/m*K oder weniger, ungefähr 14 mW/m*K oder weniger, ungefähr 12 mW/m*K oder weniger oder in einem Bereich zwischen beliebigen zwei dieser Werte auf.

Aerogel-Materialien oder Aerogel-Verbundstoffe der vorgelegten Offenbarung weisen im Allgemeinen sehr geringe Dichten auf. Im Kontext der vorliegenden Offenbarung bezieht sich der Begriff "Dichte" auf eine Messung der Masse pro Volumeneinheit. Der Begriff "Dichte" bezieht sich im Allgemeinen auf die wahre Dichte eines Aerogel-Materials sowie auf die Packungsdichte des Aerogel-Materials. Die Dichte eines Aerogel-Materials oder des Aerogel-Verbundstoffs kann gemäß Normen ASTM C167 bestimmt werden, außer es ist anders angegeben. Vorzugsweise weisen Aerogel-Materialien oder Aerogel-Verbundstoffe der vorliegenden Offenbarung eine Dichte von ungefähr 0,60 g/cm³ oder weniger, ungefähr 0,40 g/cm³ oder weniger, ungefähr 0,30 g/cm³ oder weniger, ungefähr 0,20 g/cm³ oder weniger, ungefähr 0,15 g/cm³ oder weniger, ungefähr 0,12 g/cm³ oder weniger, ungefähr 0,10 g/cm³ oder weniger, ungefähr 0,05 g/cm³ oder weniger, ungefähr 0,01 g/cm³ oder weniger oder in einem Bereich zwischen beliebigen zwei dieser Werte auf.

Aerogel-Materialien oder Aerogel-Verbundstoffe können hydrophil sein (hohe Wasserabsorption). Jedoch können Aerogel-Materialien der vorgelegten Offenbarung so modifiziert sein, dass sie eine verbesserte Hydrophobie (geringe Wasserabsorption) aufweisen. Im Kontext der vorliegenden Offenbarung bezieht sich der Begriff "Hydrophobie" auf eine Messung der Fähigkeit eines Aerogel-Materials oder des Aerogel-Verbundstoffs, Wasser abzustoßen. Im Kontext der vorliegenden Offenbarung bezieht sich der Begriff "Hydrophobie" auf eine Messung der Fähigkeit eines Aerogel-Materials oder eines Aerogel-Verbundstoffs, Wasser abzustoßen. Die Hydrophobie eines Aerogel-Materials oder des Aerogel-Verbundstoffs kann in Bezug auf die Aufnahme von flüssigem Wasser ausgedrückt werden, die das Potenzial eines Aerogel-Materials oder eines Aerogel-Verbundstoffs ist, flüssiges Wasser zu absorbieren oder auf andere Weise festzuhalten. Die Aufnahme von flüssigem Wasser kann als ein Prozentwert (bezogen auf die Masse oder das Volumen) des Wassers ausgedrückt werden, das von einem Aerogel-Material oder Aerogel-Verbundstoff absorbiert oder auf andere Weise zurückgehalten wird, wenn es unter bestimmten Messbedingungen flüssigem Wasser ausgesetzt wird. Im Kontext der vorliegenden Offenbarung werden Messungen der Aufnahme von flüssigem Wasser gemäß den Normen ASTM C1763 erfasst, außer es ist anders angegeben. Aerogel-Materialien oder Aerogel Verbundstoffe der vorliegenden Offenbarung können eine Aufnahme von flüssigem Wasser gemäß ASTM C1763 von ungefähr 30 Masse-% oder weniger, ungefähr 20 Masse-% oder weniger, ungefähr 15 Masse-% oder weniger, ungefähr 10 Masse-% oder weniger, ungefähr 8 Masse-% oder weniger, ungefähr 3 Masse-% oder weniger, ungefähr 2 Masse-% oder weniger, ungefähr 1 Masse-% oder weniger, ungefähr 0,1 Masse-% oder weniger oder in einem Bereich zwischen beliebigen zwei dieser Werte aufweisen. Die Hydrophobie eines Aerogel-Materials oder Aerogel-Verbundstoffs kann in Bezug auf die Aufnahme von Wasserdampf ausgedrückt werden, die sich auf eine Messung des Potenzials eines Aerogel-Materials oder Aerogel-Verbundstoffs bezieht, Wasserdampf zu absorbieren. Die Aufnahme von Wasserdampf kann als ein Prozentwert (bezogen auf die Masse) des Wassers ausgedrückt werden, das von einem Aerogel-Material oder einem Aerogel-Verbundstoff absorbiert oder auf andere Weise zurückgehalten wird, wenn es unter bestimmten Messbedingungen Wasserdampf ausgesetzt wird. Im Kontext der vorliegenden Offenbarung werden Messungen der Aufnahme von Wasserdampf gemäß den Normen ASTM C1104 erfasst, außer es ist anders angegeben. Vorzugsweise können Aerogel-Materialien oder Aerogel-Verbundstoffe der vorliegenden Offenbarung eine Aufnahme von Wasserdampf von ungefähr 30 Masse-% oder weniger, ungefähr 20 Masse-% oder weniger, ungefähr 15 Masse-% oder weniger, ungefähr 10 Masse-% oder weniger, ungefähr 8 Masse-% oder weniger, ungefähr 3 Masse-% oder weniger, ungefähr 2 Masse-% oder weniger, ungefähr 1 Masse-% oder weniger, ungefähr 0,1 Masse-% oder weniger oder in einem Bereich zwischen beliebigen zwei dieser Werte aufweisen. Die Hydrophobie eines Aerogel-Materials oder des Aerogel-Verbundstoffs kann durch Messen des Gleichgewichtskontaktwinkels eines Wassertröpfchens an der Grenzfläche zu der Oberfläche des Materials ausgedrückt werden. Aerogel-Materialien oder Aerogel Verbundstoffe der vorliegenden Offenbarung können einen Wasserkontaktwinkel von ungefähr 130° oder mehr, ungefähr 140° oder mehr, ungefähr 150° oder mehr, ungefähr 160° oder mehr, ungefähr 170° oder mehr, ungefähr 175° oder mehr oder in einem Bereich zwischen beliebigen zwei dieser Werte aufweisen.

Im Kontext der vorliegenden Offenbarung bezeichnen die Begriffe "Verbrennungswärme" und "VW" eine Messung der Wärmeenergiemenge, die bei der Verbrennung eines Aerogel-Materials oder eines Aerogel-Verbundstoffs freigesetzt wird. Die Verbrennungswärme wird typischerweise in Kalorien Wärmeenergie, die pro Gramm des Aerogel-Materials freigesetzt wird (cal/g), oder als Megajoule Wärmeenergie gemessen, die pro Kilogramm des Aerogel-Materials oder Aerogel Verbundstoffs freigesetzt wird (MJ/kg). Im Kontext der vorliegenden Offenbarung werden Messungen der Verbrennungswärme gemäß Bedingungen erfasst, die mit Normen ISO 1716 vergleichbar sind, außer es ist anders angegeben. Vorzugsweise können Aerogel-Materialien oder Aerogel-Verbundstoffe der vorliegenden Offenbarung eine Verbrennungswärme von ungefähr 717 cal/g oder weniger, ungefähr 700 cal/g oder weniger, ungefähr 650 cal/g oder weniger, ungefähr 600 cal/g oder weniger, ungefähr 575 cal/g oder weniger, ungefähr 550 cal/g oder weniger, ungefähr 500 cal/g oder weniger, ungefähr 450 cal/g oder weniger, ungefähr 400 cal/g oder weniger, ungefähr 350 cal/g oder weniger, ungefähr 300 cal/g oder weniger, ungefähr 250 cal/g oder weniger, ungefähr 200 cal/g oder weniger, ungefähr 150 cal/g oder weniger, ungefähr 100 cal/g oder weniger, ungefähr 50 cal/g oder weniger, ungefähr 25 cal/g oder weniger, ungefähr 10 cal/g oder weniger oder in einem Bereich zwischen beliebigen zwei dieser Werte aufweisen.

Aerogele werden als Gerüst miteinander verbundener Strukturen beschrieben, die üblicherweise miteinander verbundene Oligomere, Polymere oder Kolloidpartikel umfassen. Ein Aerogel-Gerüst kann aus einer Reihe von Vorstufenmaterialien angefertigt werden, die folgende umfassen: anorganische Vorstufenmaterialien (wie beispielsweise Vorstufen, die beim Herstellen von Siliziumdioxid-basierten Aerogelen verwendet werden); organische Vorstufenmaterialien (wie beispielsweise Vorstufen, die beim Herstellen von Kohlenstoff-basierten Aerogelen verwendet werden); hybride anorganische/organische Vorstufenmaterialien; und ihre Kombinationen. Im Kontext der vorliegenden Offenbarung bezieht sich der Begriff "Amalgam-Aerogel" auf ein Aerogel, das aus einer Kombination aus mindestens zwei verschiedenen Gelvorstufen hergestellt wurde.

Anorganische Aerogele werden im Allgemeinen aus Metalloxid- oder Metallalkoxid-Materialien gebildet. Die Metalloxid- oder Metallalkoxid-Materialien können auf Oxiden oder Alkoxiden aller Metalle basieren, die Oxide bilden können. Derartige Metalle umfassen, ohne jedoch darauf beschränkt zu sein: Silizium, Aluminium, Titan, Zirkonium, Hafnium, Yttrium, Vanadium, Cer und dergleichen. Anorganische Siliziumdioxid-Aerogele werden herkömmlicherweise über die Hydrolyse und Kondensation von Siliziumdioxid-basierten Alkoxiden (wie beispielsweise Tetraethoxylsilan) oder über Gelbildung von Kieselsäure oder Wasserglas hergestellt. Andere relevante anorganische Vorstufenmaterialien für eine Siliziumdioxid-basierte Aerogel-Synthese umfassen, ohne jedoch darauf beschränkt zu sein: Metallsiliziumdioxidte, wie beispielsweise Natriumsiliziumdioxidt oder Kaliumsiliziumdioxidt, Alkoxysilane, teilhydrolysierte Alkoxysilane, Tetraethoxylsilan (TEOS), teilhydrolysiertes TEOS, kondensierte Polymere von TEOS, Tetramethoxylsilan (TMOS), teilhydrolysiertes TMOS, kondensierte Polymere von TMOS, Tetra-n-propoxysilan, teilhydrolysierte und/oder kondensierte Polymere von Tetra-n-propoxysilan, Polyethylsiliziumdioxidte, teilhydrolysierte Polyethylsiliziumdioxidte, monomere Alkylalkoxysilane, Bis-trialkoxyalkyl- oder -arylsilane, polyedrische Silsesquioxane oder ihre Kombinationen. Bei bestimmten Ausführungsformen der vorliegenden Offenbarung kann vorhydrolysiertes TEOS, wie beispielsweise Silbond H-5 (SBH5, Silbond Corp), das mit einem Wasser/Siliziumdioxid-Verhältnis von ungefähr 1,9-2 hydrolysiert wird, wie im Handel erhältlich verwendet werden oder vor der Einarbeitung in den Gelierprozess weiter hydrolysiert werden. Teilhydrolysiertes TEOS oder TMOS, wie beispielsweise Polyethylsiliziumdioxidt (Silbond 40) oder Polymethylsiliziumdioxidt, kann auch wie im Handel erhältlich verwendet werden oder vor der Einarbeitung in den Gelierprozess weiter hydrolysiert werden.

Anorganische Aerogele können auch Gelvorstufen umfassen, die mindestens eine hydrophobe Gruppe umfassen, wie beispielsweise Alkylmetallalkoxide, Cycloalkylmetallalkoxide und Arylmetallalkoxide, die dem Gel bestimmte Eigenschaften verleihen oder diese verbessern können, wie beispielsweise Stabilität und Hydrophobie. Anorganische Siliziumdioxid-Aerogele können im Einzelnen hydrophobe Vorstufen umfassen, wie beispielsweise Alkylsilane oder Arylsilane. Hydrophobe Gelvorstufen können als primäre Vorstufenmaterialien verwendet werden, um das Gerüst eines Gelmaterials auszubilden. Jedoch werden hydrophobe Gelvorstufen üblicherweise als Co-Vorstufen in Kombnation mit einfachen Metallalkoxiden bei der Bildung von Amalgam-Aerogelen verwendet. Hydrophobe anorganische Vorstufenmaterialien für eine Siliziumdioxid-basierte Aerogel-Synthese umfassen folgende, ohne jedoch darauf beschränkt zu sein: Trimethylmethoxysilan [TMS], Dimethyldimethoxysilan [DMS], Methyltrimethoxysilan [MTMS], Trimethylethoxysilan, Dimethyldiethoxysilan [DMDS], Methyltriethoxysilan [MTES], Ethyltriethoxysilan [ETES], Diethyldiethoxysilan, Ethyltriethoxysilan, Propyltrimethoxysilan, Propyltriethoxysilan, Phenyltrimethoxysilan, Phenyltriethoxysilan [PhTES], Hexamethyldisilazan und Hexaethyldisilazan und dergleichen.

Aerogel-Materialien der vorliegenden Offenbarung sind vorzugsweise anorganische Siliziumdioxid-Aerogele, die primär aus Alkohol-Lösungen hydrolysierter Siliziumdioxidtester gebildet werden, die aus Siliziumalkoxiden gebildet werden.

Organische Aerogele werden im Allgemeinen aus Kohlenstoff-basierten Polymervorstufen gebildet. Derartige Polymermaterialien umfassen folgende, ohne jedoch darauf beschränkt zu sein: Resorcinolformaldehyde (RF), Polyimid, Polyacrylat, Polymethylmethacrylat, Acrylat-Oligomere, Polyoxyalkylen, Polyurethan, Polyphenol, Polybutadien, Trialkoxysilyl-terminiertes Polydimethylsiloxan, Polystyrol, Polyacrylnitril, Polyfurfural, Melaminformaldehyd, Cresolformaldehyd, Phenolfurfural, Polyether, Polyol, Polyisocyanat, Polyhydroxybenzol, Polyvinylalkoholdialdehyd, Polycyanurate, Polyacrylamide, verschiedene Epoxide, Agar, Agarose, Alginate, Chitosan und ihre Kombinationen. Beispielsweise werden organische RF-Aerogele typischerweise aus der Sol-Gel-Polymerisation von Resorcinol oder Melamin mit Formaldehyd unter alkalischen Bedingungen hergestellt.

Vor dem Verkleben werden die Komponenten des Polyurethanklebstoffs (C) vermischt, beispielsweise mit in der Polyurethanchemie bekannten Mischeinrichtungen, wie Hochdruck- oder Niederdruckmischern. Dabei kann im 2-Komponentenverfahren gearbeitet werden. Dazu werden die Komponenten üblicherweise in einem Verhältnis vermischt, dass der Isocyanatindex im Bereich von 80 bis 400, bevorzugt 90 - 200, besonders bevorzugt 100 - 140 liegt.

Dabei wird unter Isocyanatindex im Rahmen der vorliegenden Erfindung das stöchiometrische Verhältnis von Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Dabei soll im Rahmen der vorliegenden Erfindung unter dem Verkleben der thermischen Dämmmaterialien das Verkleben gleichartiger thermischer Dämmmaterialien untereinander und das Verkleben thermischer Dämmmaterialien (B) mit anderen Materialien, beispielsweise mit andersartigen thermischen Dämmmaterialien oder mit anderen Materialien, beispielsweise einer Deckschicht (A) verstanden werden. Das Verkleben der Deckschicht (A) mit dem thermischen Dämmmaterial (B) oder des Dämmmaterials untereinander ist nicht beschränkt und kann im diskontinuierlichen wie im kontinuierlichen Verfahren erfolgen. Solche Verfahren sind bekannt.

In einer besonders bevorzugten Ausführungsform wird die Deckschicht (A) mit dem thermischen Dämmmaterial (B) verklebt. Zum Verkleben der Deckschicht (A) mit dem thermischen Dämmmaterial (B) kann der Klebstoff (C) auf die Deckschicht (A) oder das thermische Dämmmaterial (B) aufgetragen werden. Vorzugsweise erfolgt die Auftragung des Klebstoffs (C) auf die Deckschicht (A). Die Auftragung des Klebstoffs kann durch jedes bekannte Auftragsverfahren, beispielsweise durch Rakeln, Sprühen oder durch Auftragsvorrichtungen, wie einen rotierenden, flachen Körper, erfolgen. Ein solches Auftragsverfahren mit Hilfe eines rotierenden, flachen Körpers ist beispielsweise in EP 1896259 beschrieben. Dies erfolgt üblicherweise in Mengen von 30 bis 300 g/m², bevorzugt 40 bis 200 g/m² und insbesondere 50 bis 150 g/m³.

In einer weiteren Ausführungsform der vorliegenden Erfindung werden Schichten des Dämmmaterials (B) miteinander verklebt. Vorzugsweise werden beim Verkleben der Dämmschichten als Dämmmaterialschichten (B) Aerogel-Materialien oder Aerogel-Verbundmaterialien eingesetzt.

Aerogel-Verbundstoffe wurden bereits zuvor unter Verwendung verschiedener Harze oder Klebstoffe mit den anderen Materialien verklebt. Beispiele für Harze oder Klebstoffe, die zuvor verwendet wurden, umfassen folgende: Epoxide; Cyanoacrylate; Phenol-Duroplaste; Polyetheretherketone; Caprolactame; Zement-basierte Klebstoffe; Siliziumdioxidte, wie beispielsweise Natriumsiliziumdioxidte und Kaliumsiliziumdioxidte; Latizes; Silikone; Polystyrole; Polyimide; Polyharnstoffsilazane; Polybutadiene; Urethane; Acrylat-Klebstoffe; und Kautschukharz-Klebstoffe.

Jedoch ermöglicht keiner der zuvor verwendeten Klebstoffe die Herstellung mehrschichtiger Aerogel-Verbundstoff-Isolationssysteme, welche die Kombination physikalischer Eigenschaften in den neuen Materialien der vorliegenden Offenbarung aufweisen. Durch die Verwendung erfindungsgemäßen Klebstoffs (C), werden mehrschichtige Aerogel-Verbundstoff-Isolationssysteme mit einer neuartigen Kombination von Wärmeleitfähigkeit, Verbrennungswärme und transversaler Reißfestigkeit hergestellt. Bei einer bevorzugten Ausführungsform der vorliegenden Offenbarung weist das mehrschichtige Aerogel-Verbundstoff-Isolationssystem die folgenden Eigenschaften auf: 1) eine Wärmeleitfähigkeit zwischen 12 und 25 mW/m*K, vorzugsweise zwischen 14 und 22 mW/m*K und besonders bevorzugt zwischen 14 und 20 mW/m*K; 2) eine Verbrennungswärme von 750 cal/g oder weniger, vorzugsweise 717 cal/g oder weniger, besonders bevorzugt 700 cal/g oder weniger und besonders bevorzugt 650 cal/g oder weniger; und 3) eine transversale Reißfestigkeit von 5 kPa oder mehr, vorzugsweise 7,5 kPa oder mehr, besonders bevorzugt 10 kPa oder mehr, besonders bevorzugt 12,5 kPa oder mehr und besonders bevorzugt 15 kPa oder mehr.

Erfindungsgemäße Klebstoffe (C) können auf die Oberfläche einer Aerogel-Verbundstoffschicht unter Verwendung direkter Auftragsverfahren aufgebracht werden, wie beispielsweise mit einem Spachtel, einem Pinsel, einer Rolle, einer Rakelklinge oder vergleichbarer direkter Auftragungswerkzeuge und -techniken. Ersatzweise kann eine Aufbringung unter Verwendung von Sprüh- oder Vernebelungsausrüstung erzielt werden, wie beispielsweise mit kontinuierlichen Sprühverfahren, bei denen eine Mehrkomponenten-Sprüheinrichtung eingesetzt wird, die dafür ausgelegt ist, Klebstoffe zu pumpen, zu mischen und zu zerstäuben. Alternativ kann auch eine rotierende Auftragsvorrichtung, wie oben beschrieben eingesetzt werden.

In einer Ausführungsform der vorliegenden Erfindung wird ein mehrschichtiges Isolationssystem durch Aufbringen des Klebstoffs (C) der vorliegenden Offenbarung auf die Oberfläche mindestens einer Schicht, die einen Aerogel-Verbundstoff umfasst, und anschließendes Verkleben der Aerogel-Verbundstoffschicht mit einer zweiten Materialschicht hergestellt.

In einer weiteren Ausführungsform der vorliegenden Offenbarung wird ein mehrschichtiges Isolationssystem durch Aufbringen des Klebstoffs (C) auf eine oder mehrere Oberflächen von mindestens zwei Aerogel-Verbundstoffschichten und anschließendes Verkleben der mindestens zwei Aerogel-Verbundstoffschichten, um eine mehrschichtige Aerogel-Verbundstoffplatte auszubilden, hergestellt. Die mehrschichtige Aerogel-Verbundstoffplatte kann weiter unter Verwendung zusätzlicher Mengen des Polyurethan-Klebstoffs der vorliegenden Offenbarung auf zusätzliche Schichten oder Oberflächen, wie einer Deckschicht (A), geklebt werden.

In einer bevorzugten Ausführungsform der vorliegenden Offenbarung wird ein mehrschichtiges Isolationssystem durch Aufbringen eines Polyurethan-Klebstoffs auf die Oberflächen von zwei oder mehr Schichten, die Aerogel-Verbundstoffe umfassen, und anschließendes Verkleben der mindestens zwei Aerogel-Verbundstoffschichten, um eine mehrschichtige Aerogel-Verbundstoffplatte auszubilden, hergestellt. Dabei werden als Klebstoffe, die zur Plattenherstellung aus Aerogel-Verbundstoffschichten verwendet werden, Polyurethan-Klebstoffe (C) eingesetzt. Die mehrschichtigen Aerogel-Verbundstoffplatten weisen vorzugsweise hohe transversale Reißfestigkeiten auf. Im Kontext der vorliegenden Offenbarung bezieht sich der Begriff "transversale Reißfestigkeit" auf eine Messung der Reißfestigkeit eines Materials senkrecht zu der Sichtfläche des Materials. Die transversale Reißfestigkeit wird typischerweise als kPa angegeben und kann gemäß Normen EN 1607 bestimmt werden, außer es ist anders angegeben. Vorzugsweise weisen mehrschichtige Isolationssysteme oder -platten der vorliegenden Offenbarung eine transversale Reißfestigkeit von mehr als 3 KPa, mehr als 5 kPa, mehr als 7,5 kPa, mehr als 10 kPa, mehr als 12,5 kPa, mehr als 15 kPa oder in einem Bereich zwischen beliebigen zwei dieser Werte auf.

Erfindungsgemäße Verbundelemente weisen eine sehr gute Haftung auf, beispielsweise zwischen thermischem Dämmmaterial (B) und Deckschicht (A) oder den verklebten Schichten des thermischen Dämmmaterials (B) untereinander. Weiter weisen diese eine sehr hohe Brandfestigkeit auf. Schließlich ist bereits eine geringe Menge an Klebstoff (C) für eine Verklebung mit guter Festigkeit ausreichend, wodurch die Brandfestigkeit des Verbundelements gegenüber Verbundelementen aus dem Stand der Technik weiter verbessert wird.

Im Folgenden wird die Erfindung anhand von Beispielen verdeutlicht:
Die Folgenden Einsatzstoffe wurden verwendet:
Polyol 1: Polypropylenoxidtriol, OH-Zahl 400 mg KOH/g
Polyol 2: Polypropylenoxiddiol, OH-Zahl 190 mg KOH/g
Polyol 3: Polypropylenoxidtriol, OH-Zahl 160 mg KOH/g
Polyol 4: aromatisches Polyesterol der Firma Stepan, mit einer OH-Zahl von 315 mg KOH/g und einer OH-Funktionalität von 2,0 (PS-3152)
Polyol 5: Polyethylenoxiddiol, OH-Zahl 190 mg KOH/g
Aminkat.: Triethylendiamin 33%ig in Dipropylenglykol
Füllstoff: Kombination aus Calciumcarbonat- und Silicapartikeln der Firmen Omya und Evonik Industr., Gew.Verhältn. 98,8% Calciumcarbonat zu 1,2% Silica
Stab.: Silikonstabilisator
Disp.:Dispergiermittel Kombination aus Calciumcarbonat- und Silica-Partikeln der Firmen Omya und Evonik Industries, Gew.Verhältnis 98,8% Calciumcarbo nat zu 1,2% Silica
Isocyanat: Gemisch aus MDI und höherkernigen Homologen des MDI mit einer Viskosität bei 25 °C von ca. 200 mPas bei 25 °C

Gemäß Tabelle 1 wurden Klebstoffe hergestellt und deren Aushärteverhalten untersucht und anhand eines Bechertests bei Raumtemperatur bestimmt. Dazu wurde die Polyolkomponente gemäß Tabelle hergestellt und mit dem Isocyanat bei einem Isocyanatindex von 110 vermischt. Die Bestimmung der Viskosität erfolgte direkt nach Vermischen der Komponenten (b)-(f).

Zur Bestimmung der Zugfestigkeiten und E-Module wurden Mineralwollewürfel der Abmessungen 100 x 100 x 95 mm auf gegenüberliegenden Seiten mit Metalldeckschichten aus Stahl der Abmessungen 100 x 100 x 0,7 mm in einer elektrisch beheizten Würfelform (100 x 100 x 95,5 mm) zu einem Sandwichwürfel verklebt. Dazu wird die Formulierung direkt nach dem Homogenisieren mit Hilfe eines Rakels auf die Oberflächen der beiden Bleche aufgetragen und die Auftragsmenge durch Wiegen bestimmt. Das erste Blech wird sofort mit der benetzen Seite nach oben in der auf 40°C temperierten Form platziert. Anschließend werden die Mineralwolle und danach das zweite Blech mit der benetzten Oberfläche nach unten in der Form platziert und diese wird verschlossen. Nach 5 Minuten, ab Beginn des Vermischens der A- und B-Komponente, wird der Sandwichwürfel entformt. Pro Versuchsreihe werden zwei Sandwichwürfel angefertigt.

Nach 24 Stunden werden die Würfel in einem Abstand von 2 cm parallel zu den Metalldeckschichten zersägt, so dass pro Würfel zwei Prüfkörper mit je 100 x 100 x 20 mm Abmaßen erhalten werden. Damit erfolgte die Prüfung an jeweils 4 Probekörpern je Versuchsreihe, bei den in der Tabelle angegebenen Werte handelt es sich um Mittelwerte aus den vier Messungen.

Die Zugversuche senkrecht zur Deckschicht werden mit einer Universalprüfmaschine Z 1474 der Zwick GmbH & Co. gemäß nach EN 1607 durchgeführt, indem eine Vorkraft von 50 N auf die Prüfkörper gegeben wird und anschließend die Kraft mit einer Prüfgeschwindigkeit von 1mm/min bis zum Bruch ermittelt wird. Die Prüfkörper werden mittels eines kompakten 2K-Polyurethanklebstoffs im Überschuss mit den Halterungen (Joche), die in die Prüfmaschine eingespannt werden, verklebt und mind. 12 Stunden bei Raumtemperatur ausgehärtet.

Weiter erfolgte eine optische Bewertung der einzelnen Abrissbilder. Diese erfolgt nach der Klassifizierung gemäß Tabelle 2. In Tabelle 1 sind die Mittelwerte der einzelnen optischen Bewertungen angegeben. Sofern nicht anders angegeben beziehen sich die Angaben auf Gewichtsteile.

**Tabelle 1**

| | Vergl. 1 | Vergl. 2 | Vergl. 3 | Vergl. 4 | Vergl. 5 | Vergl. 6 | Bsp. 1 | Bsp. 2 |
|---|---|---|---|---|---|---|---|---|
| Ricinusöl | 24,5 | 62 | | | | | | |
| Polyol 1 | 13,4 | 34 | 13,15 | 34 | | | 13,4 | 34 |
| Polyol 2 | | | 24,1 | 62 | | | | |
| Polyol 3 | | | | | 16,25 | 42 | | |
| Polyol 4 | | | | | 21 | 54 | | |
| Polyol 5 | | | | | | | 24,5 | 62 |
| Aminkat. | 1,3 | 2,5 | 0,95 | 1,05 | 0,55 | 1,05 | 0,4 | 0,55 |
| Stabi | 1,0 | 1,0 | 1,0 | 1,0 | 1,0 | 1,0 | 1,0 | 1,0 |
| Wasser | 0,93 | 1,75 | 1,0 | 0,95 | 1,2 | 2,1 | 1,0 | 2,0 |
| Füllstoff | 60,75 | | 60,75 | | 60,75 | | 60,75 | |
| Disp | 1,0 | | 1,0 | | 1,0 | | 1,0 | |
| | | | | | | | | |
| Isocyanat 1 | 42,6 | 97,7 | 43,4 | 95,5 | 46,1 | 101,3 | 44,2 | 100,9 |
| Index | 110 | 110 | 110 | 110 | 110 | 110 | 110 | 110 |
| | | | | | | | | |
| Viskosität [mPas] bei 20 °C | 7056 | 698 | 5869 | 215 | 42760 | 246 | 9366 | 199 |
| Startzeit [s] | 16 | 20 | 15 | 16 | 22 | 28 | 15 | 23 |
| Gelzeit [s] | 62 | 62 | 63 | 65 | 62 | 60 | 55 | 62 |
| Dichte [g/L] | 79,2 | 59,2 | 78,3 | 57,5 | 80,6 | 62,3 | 83,4 | 56,2 |
| Auftragsmenge [g/m²] | 180 | 126 | 159 | 137 | 189 | 126 | 131 | 116 |
| Zugfestigkeit [N/mm²] | 0,06 | 0,15 | 0,11 | 0,19 | 0,18 | 0,18 | 0,24 | 0,18 |
| E-Modul [N/mm²] | 4,9 | 6,28 | 6,4 | 7,63 | 8,6 | 6,28 | 8,1 | 6,80 |
| Brennwert [MJ/kg] | 17,740 | 31,592 | 16,324 | 29,141 | 15,670 | 27,875 | 15,278 | 25,336 |
| Opt. Bewertung | 4,0 | 2,0 | 3,4 | 3,5 | 2,9 | 2,5 | 2,6 | 2,5 |

**Tabelle 2**

| Bewertung | Erläuterung |
|---|---|
| 1,0 - 1,9 | Flächendeckende Schicht des Fixierklebstoffs / Mineralwolle vollständig intakt |
| 2,0 - 2,9 | Reste des Fixierklebstoffes / Mineralwolle fast vollständig intakt |
| 3,0 - 3,9 | Flächendeckende, dicke Mineralwollschicht |
| 4,0 - 4,9 | Dünne Mineralwollschicht durch die die Metalldeckschicht erkennbar ist |
| 5,0 - 5,9 | Kleine Stellen der Metalldeckschicht ohne Mineralwollanhaftung |
| 6,0 | Großflächige Stellen der Metalldeckschicht ohne Mineralwollanhaftung |

Aus den angegebenen Werten ist klar ersichtlich, dass durch die eingesetzte Polyolkombination gegenüber bekannten Polyolkombinationen die Auftragsmenge an Klebstoff verringert werden kann und gleichzeitig die Haftung sogar noch verbessert wird, was sich durch gute Zugfestigkeiten und eine hervorragende optische Beurteilung der Abrissbilder zeigt. Weiter weist der erfindungsgemäße Polyurethanklebstoff eine akzeptable Viskosität und ein hervorragendes Brandverhalten.

### Beispiel 3

Mehrschichtige Laminate werden unter Verwendung des Klebstoffs aus Beispiel 1 werden hergestellt. Dazu werden mehrere Coupons Spaceloft A2 Aerogel-Verbundstoff (eine schwerbrennbare Aerogel-Isolation mit einer nominalen Dicke von 10 mm, von Aspen Aerogels, Inc) bereitgestellt. Der Klebstoff gemäß Beispiel 1 wird dann mit einer Beladung von 100 g/m² auf die obere Oberfläche eines diskreten Spacleoft A2 Coupons unter Verwendung direkter Aufbringungsverfahren aufgebracht (Spachtel, Pinsel, Rolle, Rakelklinge usw.). Ersatzweise wird eine Aufbringung eines zweikomponentigen PU-Klebstoffs auch über die Verwendung kontinuierlicher Sprühverfahren erzielt, bei denen eine Mehrkomponenten-Sprüheinrichtung eingesetzt wird, die dafür ausgelegt ist, Klebstoffe mit 100 % Feststoffgehalt zu pumpen, zu mischen und zu zerstäuben. Diskrete Spacleoft A2 Coupons, die mit der zweikomponentigen Mischung über direkte Verfahren oder Sprühverfahren beschichtet wurden, werden dann zu einer mehrschichtigen Platte zusammengesetzt, auf eine Last von höchstens 2,5 psi komprimiert und bei Raumtemperatur für eine Dauer von nicht mehr als 60 Minuten aushärten gelassen.

Eine Platte Spaceloft A2 von 20 mm, die auf eine derartige Weise hergestellt wurde, zeigt eine transversale Reißfestigkeit von 12 kPa, zeigt primär Substratbruch und keinen Bruch der Klebstoffschicht. Platten, die mit einem nominellen Klebstoffgewicht von 100 g/m² hergestellt wurden, zeigen einen Anstieg der Wärmeleitfähigkeit von nicht mehr als 10 % im Verhältnis zur zugrundeliegenden Aerogel-Isolationsdecke und weisen eine Wärmeleitfähigkeit zwischen 12 und 25 mW/m*K, besonders bevorzugt zwischen 14 und 20 mW/m*K, auf.

### Vergleich 7

Mehrschichtige Laminate aus Spaceloft A2, einer nicht brennbaren Aerogel-basierten Isolationsdecke, wurden unter Verwendung anorganischer Klebstoffe hergestellt. Im Einzelnen wurde eine Reihe von 10 mm dicken Isolationsproben, die 20 x 20 cm messen, über eine Auftragung eines verdünnten Kaliumsiliziumdioxidt-(Kasil 1)-Klebstoffs auf jede Grenzfläche zwischen den Lagen verklebt, um ein 20 bis 50 mm dickes einteiliges Isolationslaminat auszubilden. Siliziumdioxidt-basierte Klebstoffe wurden auf die Oberfläche eines Verbundstoff-Aerogels unter Verwendung eines normalen HVLP-Sprüh- oder direkten Aufbringungsverfahrens aufgebracht. Um die Verklebungsfestigkeit der endgültigen Platte zu verbessern, wurde die zusammengesetzte Platte mit einem nassen Klebstoff gehärtet, während sie unter einer uniaxialen Kompression mit einer Last nicht größer als 2,5 psi stand. Um die Härtung des wässrigen Siliziumdioxidt-Klebstoffs zu beeinflussen, wurde eine mehrschichtige Einheit von Verbundstoff-Aerogel und nassem Klebstoff bei 120 °C unter Druck für minimal 12 Stunden in einem Konvektionsofen trocknen gelassen. Ersatzweise kann das Härten und Trocknen des Siliziumdioxidt-Klebstoffs innerhalb eines Zeitraums von 20 Minuten unter Verwendung dielektrischen Erhitzens ausgeführt werden.

Die transversale Reißfestigkeit von Platten aus Spaceloft A2, die auf eine derartige Weise hergestellt wurden, ist nachfolgend als Funktion der nominalen trockenen Klebstoffmasse gezeigt. Mehrschichtige Platten zeigen leider Werte der transversalen Reißfestigkeit nach EN 1607 deutlich unter denen, die in ETAG 004 zur Verwendung in außenisolierten Fassadensystemen (EIFS) empfohlen sind.

**Tabelle 3. Transversale Reißfestigkeit eines mehrschichtigen Laminats aus Spaceloft A2, das mit Kaliumsiliziumdioxidt verklebt ist.**

| Kaliumsiliziumdioxidt (g/m2) | Transversale Reißfestigkeit (kPa) |
|---|---|
| 25 | 1,8 |
| 50 | 3,1 |
| 75 | 2,5 |
| 100 | 2,8 |
| 150 | 3,5 |
| 200 | 4,3 |

Die Wärmeleitfähigkeit der resultierenden Platten aus Spaceloft A2 von 20 mm, die mit Kaliumsiliziumdioxidt bei einer trockenen Beladung von 25 bis 200 g/m² hergestellt wurden, wurde gemessen. Die resultierenden Wärmeleitfähigkeitswerte der mehrschichtigen Laminate stiegen um nicht mehr als 10 % im Verhältnis zu denen an, die für die zugrundeliegende Isolationsdecke beobachtet werden. Die Werte der Verbrennungswärme einer verklebten Platte aus Spaceloft A2 von 20 mm, die mit einer nominalen trockenen Klebstoffmasse von 50 g/m² hergestellt wurde, wurden auch gemäß den Verfahren bestimmt, die in ISO 1716 beschrieben sind. Platten, die auf eine derartige Weise hergestellt wurden, zeigten einen durchschnittlichen Wert der Verbrennungswärme von 2,2 MJ/kg (für den Verbundstoff als ein Ganzes), einen Wert, der bei oder unter dem liegt, der für die zugrundeliegende Isolationsdecke gemessen wird.

## Patentansprüche

1. Verfahren zur Herstellung von Verbundelementen, enthaltend thermisches Dämmmaterial (B), und Klebstoff (C) und gegebenenfalls mindestens eine Deckschicht (A), wobei man das thermische Dämmmaterial (B) mit dem Klebstoff (C) verklebt, **dadurch gekennzeichnet, dass** der Klebstoff (C) ein Polyurethanklebstoff ist, herstellbar durch Vermischen von
(a) Polyisocyanaten mit,
(b) Polyolen mit zumindest zwei gegenüber Isocyanaten reaktiven Gruppen,
(c) Treibmitteln, enthaltend Wasser, und gegebenenfalls
(d) Kettenverlängerern,
(e) Katalysatoren und
(f) sonstige Hilfsmitteln,
wobei die Polyole (b) Polyetherole enthalten und die Polyetherole
(b1) 50 bis 90 Gew.-% mindestens eines Polyalkylenoxids mit einer Hydroxylzahl von 120 bis 300 mg KOH/g, ausgehend von einem 2-funktionellen Startermolekül und einem Ethylenoxydanteil, bezogen auf den Gehalt an Alkylenoxyd, von 60 bis 100 Gew.-%, und einem Anteil an primären OH-Gruppen von 50 bis 100 %,
(b2) 10 bis 50 Gew.-% mindestens eines Polyalkylenoxids mit einer Hydroxylzahl von 120 bis 600 mg KOH/g, ausgehend von einem difunktionellen und/oder einem trifunktionellen Startermolekül und einem Ethylenoxydanteil, bezogen auf den Gehalt an Alkylenoxyd, von 0 bis 40 Gew.-% und
(b3) 0 bis 30 Gew.-% mindestens eines weiteren Polyalkylenoxids mit einer Hydroxylzahl von 100 bis 800 mg KOH/g, ausgehend von einem 2 bis 4-funktionellen Startermolekül, das sich von den Polyetherolen (b1) und (b2) unterscheidet,
jeweils bezogen auf das Gesamtgewicht der Komponenten (b1) bis (b3), enthalten.

2. Verfahren nach Anspruch 1, **dadurch gekennzeichnet, dass** der Anteil der Komponenten (b1) bis (b3) 70 bis 100 Gew.-%, bezogen auf das Gesamtgewicht der Komponente (b) beträgt.

3. Verfahren nach Anspruch 1 oder 2, **dadurch gekennzeichnet, dass** die Komponente (b2) ausschließlich ausgehend von triifunktionellen Startermolekülen erhältlich ist.

4. Verfahren nach einem der Ansprüche 1 bis 3, **dadurch gekennzeichnet, dass** der Ethylenoxiydgehalt des Polyetherols (b1), bezogen auf den Gehalt an Alkylenoxyd im Polyetherol (b1), 100 Gew.-% beträgt.

5. Verfahren nach einem der Ansprüche 1 bis 4, **dadurch gekennzeichnet, dass** der Propylenoxidgehalt des Polyetherols (b2), bezogen auf den Gehalt an Alkylenoxyd im Polyetherol (b2), 100 Gew.-% beträgt.

6. Verfahren nach einem der Ansprüche 1 bis 5, **dadurch gekennzeichnet, dass** kein Polyetherpolyol (b3) eingesetzt wird.

7. Verfahren nach einem der Ansprüche 1 bis 6, **dadurch gekennzeichnet, dass** als Treibmittel ausschließlich Wasser eingesetzt wird und der Gehalt an Wasser, bezogen auf das Gesamtgewicht der Komponenten (b) bis (e), 0,3 bis 3 Gew.-% beträgt.

8. Verfahren nach einem der Ansprüche 1 bis 7, **dadurch gekennzeichnet, dass** als Katalysator (e) ein tertiärer Aminkatalysator eingesetzt wird.

9. Verfahren nach einem der Ansprüche 1 bis 8, **dadurch gekennzeichnet, dass** die Hilfsmittel (f) ein Verdickungsmittel mit zwei Aminogruppen, die jeweils primär oder sekundär sein können, und einem Molekulargewicht kleiner 500 g/mol aufweisen, enthalten.

10. Verfahren nach Anspruch 9, **dadurch gekennzeichnet, dass** die Aminogruppen primäre Aminogruppen sind, die Aminogruppen an aromatische Kohlenstoffatome gebunden sind.

11. Verfahren nach einem der Ansprüche 1 bis 10, **dadurch gekennzeichnet, dass** der Klebstoff (C) 30 bis 70 Gew.-%, bezogen auf das Gesamtgewicht des Klebstoffs (C), anorganische Füllstoffe enthält.

12. Verfahren nach einem der Ansprüche 1 bis 11, **dadurch gekennzeichnet, dass** das thermischem Dämmmaterial (B) Mineralwolle und/oder Steinwolle ist.

13. Verfahren nach einem der Ansprüche 1 bis 11, **dadurch gekennzeichnet, dass** das thermischem Dämmmaterial (B) Aerogel-Materialien oder Aerogel-Verbundstoffe aufweist.

14. Verfahren nach Anspruch 13, **dadurch gekennzeichnet, dass** Aerogel-Materialien miteinander verklebt werden.

15. Verfahren nach einem der Ansprüche 1 bis 14, **dadurch gekennzeichnet, dass** Polyisocyanat (a) Isocyanate enthält, ausgewählt aus der Gruppe, bestehend aus 2,4'-MDI, 4,4'-MDI, höherkernigen Homologen des MDI oder Mischungen aus zwei oder mehreren dieser Komponenten.

16. Verfahren nach einem der Ansprüche 1 bis 15, **dadurch gekennzeichnet, dass** die Deckschicht (A) und das thermische Dämmmaterial (B) mit dem Klebstoff (C) verklebt werden.

17. Verbundelemente enthaltend thermischem Dämmmaterial (B) und Klebstoff (C) und gegebenenfalls mindestens eine Deckschicht (A), erhältlich nach einem Verfahren gemäß einem der Ansprüche 1 bis 16.

18. Verwendung des Klebstoffs (C), herstellbar durch Vermischen von
(a) Polyisocyanaten mit,
(b) Polyolen mit zumindest zwei gegenüber Isocyanaten reaktiven Gruppen,
(c) Treibmitteln, enthaltend Wasser und gegebenenfalls
(d) Kettenverlängerern,
(e) Katalysatoren und
(f) sonstige Hilfsmitteln,
wobei die Polyole (b) Polyetherole enthalten und die Polyetherole
(b1) 50 bis 90 Gew.-% mindestens eines Polyalkylenoxids mit einer Hydroxylzahl von 120 bis 300 mg KOH/g, ausgehend von einem 2-funktionellen Startermolekül und einem Ethylenoxydanteil, bezogen auf den Gehalt an Alkylenoxyd, von 60 bis 100 Gew.-%, und einem Anteil an primären OH-Gruppen von 50 bis 100 %,
(b2) 10 bis 50 Gew.-% mindestens eines Polyalkylenoxids mit einer Hydroxylzahl von 120 bis 600 mg KOH/g, ausgehend von einem difunktionellen und/oder einem trifunktionellen Startermolekül und einem Ethylenoxydanteil, bezogen auf den Gehalt an Alkylenoxyd, von 0 bis 40 Gew.-% und
(b3) 0 bis 30 Gew.-% mindestens eines weiteren Polyalkylenoxids mit einer Hydroxylzahl von 100 bis 800 mg KOH/g, ausgehend von einem 2 bis 4-funktionellen Startermolekül, das sich von den Polyetherolen (b1) und (b2) unterscheidet,
jeweils bezogen auf das Gesamtgewicht der Komponenten (b1) bis (b3), enthalten, zur Verklebung von thermischem Dämmmaterial (B).

## Claims

1. A process for producing composite elements comprising thermal insulation material (B) and adhesive (C) and optionally at least one outer layer (A), where the thermal insulation material (B) is bonded with the adhesive (C), wherein the adhesive (C) is a polyurethane adhesive preparable by mixing
(a) polyisocyanates with
(b) polyols having at least two isocyanate-reactive groups,
(c) blowing agents comprising water, and optionally
(d) chain extenders,
(e) catalysts and
(f) other auxiliaries,
where the polyols (b) comprise polyetherols and the polyetherols comprise
(b1) 50% to 90% by weight of at least one polyalkylene oxide having a hydroxyl number of from 120 to 300 mg KOH/g, based on a difunctional starter molecule, and an ethylene oxide content, based on the content of alkylene oxide, of from 60% to 100% by weight, and a proportion of primary OH groups of from 50% to 100%, (b2) 10% to 50% by weight of at least one polyalkylene oxide having a hydroxyl number of from 120 to 600 mg KOH/g, based on a difunctional and/or a trifunctional starter molecule, and an ethylene oxide content, based on the content of alkylene oxide, of from 0% to 40% by weight and
(b3) 0% to 30% by weight of at least one further polyalkylene oxide having a hydroxyl number of from 100 to 800 mg KOH/g, based on a difunctional to tetrafunctional starter molecule, which differs from the polyetherols (b1) and (b2),
based in each case on the total weight of components (b1) to (b3).

2. The process according to claim 1, wherein the proportion of components (b1) to (b3) is 70% to 100% by weight, based on the total weight of component (b).

3. The process according to claim 1 or 2, wherein component (b2) is obtainable exclusively proceeding from trifunctional starter molecules.

4. The process according to any of claims 1 to 3, wherein the ethylene oxide content of the polyetherol (b1), based on the content of alkylene oxide in the polyetherol (b1), is 100% by weight.

5. The process according to any of claims 1 to 4, wherein the propylene oxide content of the polyetherol (b2), based on the content of alkylene oxide in the polyetherol (b2), is 100% by weight.

6. The process according to any of claims 1 to 5, wherein no polyether polyol (b3) is used.

7. The process according to any of claims 1 to 6, wherein the blowing agent used is exclusively water and the content of water, based on the total weight of components (b) to (e), is 0.3% to 3% by weight.

8. The process according to any of claims 1 to 7, wherein the catalyst (e) used is a tertiary amine catalyst.

9. The process according to any of claims 1 to 8, wherein the auxiliaries (f) comprise a thickener having two amino groups, each of which may be primary or secondary, and a molecular weight of less than 500 g/mol.

10. The process according to claim 9, wherein the amino groups are primary amino groups, the amino groups being bonded to aromatic carbon atoms.

11. The process according to any of claims 1 to 10, wherein the adhesive (C) comprises 30% to 70% by weight of inorganic fillers, based on the total weight of the adhesive (C).

12. The process according to any of claims 1 to 11, wherein the thermal insulation material (B) is mineral wool and/or rock wool.

13. The process according to any of claims 1 to 11, wherein the thermal insulation material (B) comprises aerogel materials or aerogel composites.

14. The process according to claim 13, wherein aerogel materials are bonded to one another.

15. The process according to any of claims 1 to 14, wherein polyisocyanate (a) comprises isocyanates selected from the group consisting of 2,4'-MDI, 4,4'-MDI, higher polycyclic homologs of MDI or mixtures of two or more of these components.

16. The process according to any of claims 1 to 15, wherein the outer layer (A) and the thermal insulation material (B) are bonded with the adhesive (C).

17. A composite element comprising thermal insulation material (B) and adhesive (C) and optionally at least one outer layer (A), obtainable by a process according to any of claims 1 to 16.

18. The use of the adhesive (C), preparable by mixing
(a) polyisocyanates with
(b) polyols having at least two isocyanate-reactive groups,
(c) blowing agents comprising water and optionally
(d) chain extenders,
(e) catalysts and
(f) other auxiliaries,
where the polyols (b) comprise polyetherols and the polyetherols comprise
(b1) 50% to 90% by weight of at least one polyalkylene oxide having a hydroxyl number of from 120 to 300 mg KOH/g, based on a difunctional starter molecule, and an ethylene oxide content, based on the content of alkylene oxide, of from 60% to 100% by weight, and a proportion of primary OH groups of from 50% to 100%, (b2) 10% to 50% by weight of at least one polyalkylene oxide having a hydroxyl number of from 120 to 600 mg KOH/g, based on a difunctional and/or a trifunctional starter molecule, and an ethylene oxide content, based on the content of alkylene oxide, of from 0% to 40% by weight and
(b3) 0% to 30% by weight of at least one further polyalkylene oxide having a hydroxyl number of from 100 to 800 mg KOH/g, based on a difunctional to tetrafunctional starter molecule, which differs from the polyetherols (b1) and (b2),
based in each case on the total weight of components (b1) to (b3),
for the bonding of thermal insulation material (B).

## Revendications

1. Procédé pour la fabrication d'éléments composites contenant un matériau isolant thermique (B) et un adhésif (C) et le cas échéant au moins une couche de recouvrement (A), le matériau isolant thermique (B) étant collé à l'aide de l'adhésif (C), **caractérisé en ce que** l'adhésif (C) est un adhésif à base de polyuréthane, pouvant être préparé par mélange
(a) de polyisocyanates avec
(b) des polyols présentant au moins deux groupes réactifs par rapport aux isocyanates,
(c) des agents gonflants contenant de l'eau et le cas échéant
(d) des agents d'allongement de chaîne,
(e) des catalyseurs et
(f) d'autres adjuvants,
les polyols (b) contenant des polyétherols et les polyétherols contenant
(b1) 50 à 90% en poids d'au moins un poly (oxyde d'alkylène) présentant un indice d'hydroxyle de 120 à 300 mg de KOH/g, en partant d'une molécule de départ difonctionnelle et d'une proportion d'oxyde d'éthylène, par rapport à la teneur en oxyde d'alkylène, de 60 à 100% en poids et d'une proportion de groupes OH primaire de 50 à 100%,
(b2) 10 à 50% en poids d'au moins un poly(oxyde d'alkylène) présentant un indice d'hydroxyle de 120 à 600 mg de KOH/g, en partant d'une molécule de départ difonctionnelle et/ou trifonctionnelle et d'une proportion d'oxyde d'éthylène, par rapport à la teneur en oxyde d'alkylène, de 0 à 40% en poids et
(b3)0 à 30% en poids d'au moins un poly(oxyde d'alkylène) supplémentaire présentant un indice d'hydroxyle de 100 à 800 mg de KOH/g, en partant d'une molécule de départ difonctionnelle à tétrafonctionnelle qui se distingue des polyétherols (b1) et (b2),
à chaque fois par rapport au poids total des composants (b1) à (b3).

2. Procédé selon la revendication 1, **caractérisé en ce que** la proportion des composants (b1) à (b3) est de 70 à 100% en poids par rapport au poids total du composant (b) .

3. Procédé selon la revendication 1 ou 2, **caractérisé en ce que** le composant (b2) est obtenu exclusivement en partant de molécules de départ trifonctionnelles.

4. Procédé selon l'une quelconque des revendications 1 à 3, **caractérisé en ce que** la teneur en oxyde d'éthylène du polyétherol (b1), par rapport à la teneur en oxyde d'alkylène dans le polyétherol (b1), est de 100% en poids.

5. Procédé selon l'une quelconque des revendications 1 à 4, **caractérisé en ce que** la teneur en oxyde de propylène du polyétherol (b2), par rapport à la teneur en oxyde d'alkylène dans le polyétherol (b2), est de 100% en poids.

6. Procédé selon l'une quelconque des revendications 1 à 5, **caractérisé en ce qu'**on n'utilise pas de polyétherpolyol (b3).

7. Procédé selon l'une quelconque des revendications 1 à 6, **caractérisé en ce qu'**on utilise, comme agent gonflant, exclusivement de l'eau et la teneur en eau, par rapport au poids total des composants (b) à (e), est de 0,3 à 3% en poids.

8. Procédé selon l'une quelconque des revendications 1 à 7, **caractérisé en ce qu'**on utilise, comme catalyseur (e), un catalyseur à base d'amine tertiaire.

9. Procédé selon l'une quelconque des revendications 1 à 8, **caractérisé en ce que** les adjuvants (f) contiennent un épaississant présentant deux groupes amino, qui peuvent chacun être primaire ou secondaire, et un poids moléculaire inférieur à 500 g/mole.

10. Procédé selon la revendication 9, **caractérisé en ce que** les groupes amino sont des groupes amino primaire et les groupes amino sont liés à des atomes de carbone aromatiques.

11. Procédé selon l'une quelconque des revendications 1 à 10, **caractérisé en ce que** l'adhésif (C) contient 30 à 70% en poids, par rapport au poids total de l'adhésif (C), de charges inorganiques.

12. Procédé selon l'une quelconque des revendications 1 à 11, **caractérisé en ce que** le matériau isolant thermique (B) est de la laine minérale et/ou de la laine de roche.

13. Procédé selon l'une quelconque des revendications 1 à 11, **caractérisé en ce que** le matériau isolant thermique (B) présente des matériaux de type aérogel ou des composites de type aérogel.

14. Procédé selon la revendication 13, **caractérisé en ce que** les matériaux de type aérogel sont collés les uns aux autres.

15. Procédé selon l'une quelconque des revendications 1 à 14, **caractérisé en ce que** le polyisocyanate (a) contient des isocyanates choisis dans le groupe constitué par le 2,4'-MDI, le 4,4'-MDI, des homologues du MDI présentant un nombre supérieur de noyaux ou des mélanges de deux de ces composants ou plus.

16. Procédé selon l'une quelconque des revendications 1 à 15, **caractérisé en ce que** la couche de recouvrement (A) et le matériau isolant thermique (B) sont collés par l'adhésif (C).

17. Éléments composites contenant un matériau isolant thermique (B) et un adhésif (C) et le cas échéant au moins une couche de recouvrement (A), pouvant être obtenus selon un procédé selon l'une quelconque des revendications 1 à 16.

18. Utilisation de l'adhésif (C) pouvant être préparé par mélange
(a) de polyisocyanates avec
(b) des polyols présentant au moins deux groupes réactifs par rapport aux isocyanates,
(c) des agents gonflants contenant de l'eau et le cas échéant
(d) des agents d'allongement de chaîne,
(e) des catalyseurs et
(f) d'autres adjuvants,
les polyols (b) contenant des polyétherols et les polyétherols contenant
(b1) 50 à 90% en poids d'au moins un poly (oxyde d'alkylène) présentant un indice d'hydroxyle de 120 à 300 mg de KOH/g, en partant d'une molécule de départ difonctionnelle et d'une proportion d'oxyde d'éthylène, par rapport à la teneur en oxyde d'alkylène, de 60 à 100% en poids et d'une proportion de groupes OH primaire de 50 à 100%,
(b2) 10 à 50% en poids d'au moins un poly (oxyde d'alkylène) présentant un indice d'hydroxyle de 120 à 600 mg de KOH/g, en partant d'une molécule de départ difonctionnelle et/ou trifonctionnelle et d'une proportion d'oxyde d'éthylène, par rapport à la teneur en oxyde d'alkylène, de 0 à 40% en poids et
(b3)0 à 30% en poids d'au moins un poly(oxyde d'alkylène) supplémentaire présentant un indice d'hydroxyle de 100 à 800 mg de KOH/g, en partant d'une molécule de départ difonctionnelle à tétrafonctionnelle qui se distingue des polyétherols (b1) et (b2),
à chaque fois par rapport au poids total des composants (b1) à (b3), pour le collage d'un matériau isolant thermique (B).
